# FASCICULE DE BREVET EUROPEEN

(11) **EP 1 046 767 B1**
(45) Date de publication et mention de la délivrance du brevet: **10.11.2004**
(21) Numéro de dépôt: 00500027.8
(22) Date de dépôt: 23.02.2000
(51) Int. Cl.: E04H 17/12, A01G 17/06, A01G 17/14

(54) **Poteau perfectionné pour treillages et similaires**
Pfosten für Spaliere oder ähnliches
Post for trellis or similar

(30) Priorité: 21.04.1999 ES 9901018 U
(43) Date de publication de la demande: 25.10.2000
(73) Titulaire: Aceralia Transformados, S.A., 31014 Pamplona (Navarra) (ES)
(72) Inventeur: Arce Erro, Jose Javier, 31014 Pamplona (Navarra) (ES)
(74) Mandataire: Urizar Barandiaran, Miguel Angel

(56) Documents cités:
- EP-A- 0 258 157
- FR-A- 2 311 497
- FR-A- 2 765 609

## Description

La présente invention a pour objet un poteau , pour treillages et applications similaires (par exemple, poteaux de clôtures et de palissades).

Conventionnellement, ces poteaux sont obtenus à partir d'une tôle métallique pliée. La simplicité requise par les coûts est limitée par la courte durée de vie des raccords assujettis résultants quand on assemble la tôle pliée.

Il y a une autre limitation de construction, du fait des opérations complexes (ou, du moins, nombreuses) qui sont nécessaires , dans le but de conformer aussi bien les poteaux eux-mêmes que les moyens pour y amarrer le fil métallique.

Le poteau connu du document EP-A-0 258 157 présente les caractéristiques du préambule de la revendication.

Le poteau pour treillages et similaires réduit, selon la présente invention, cette problématique, car, il a pour structure un profilé métallique dont la longueur définit la hauteur du poteau, et:
a) Ce profilé comporte une section en "U" dont l'âme et les ailes offrent une continuité structurale courbe et dépourvue d'unions assemblées sur toute sa surface périphérique, aussi bien intérieurement qu'extérieurement:
b) Ce profilé métallique ouvert comporte un grand nombre d'orifices, distribués en deux alignements longitudinaux diamétralement opposés au niveau des ailes.
   Notamment, le poteau se caractérise par le fait que:
c) Ce profilé métallique ouvert comporte un grand nombre d'estampages transversaux se distribuant dans un sens axé sur l'âme, qui lui confèrent une rigidité structurale.

Pour mieux comprendre l'objet de la présente invention, une forme préférentielle de réalisation pratique, susceptible de changements accessoires qui n'en dénaturent pas le principe, est représentée sur les plans.

La figure 1 représente en deux phases, en hauteur -figure 1a- et de profil -figure 1b-, un poteau perfectionné pour treillages et similaires, selon l'invention, pour un exemple -non limitatif- de réalisation pratique.

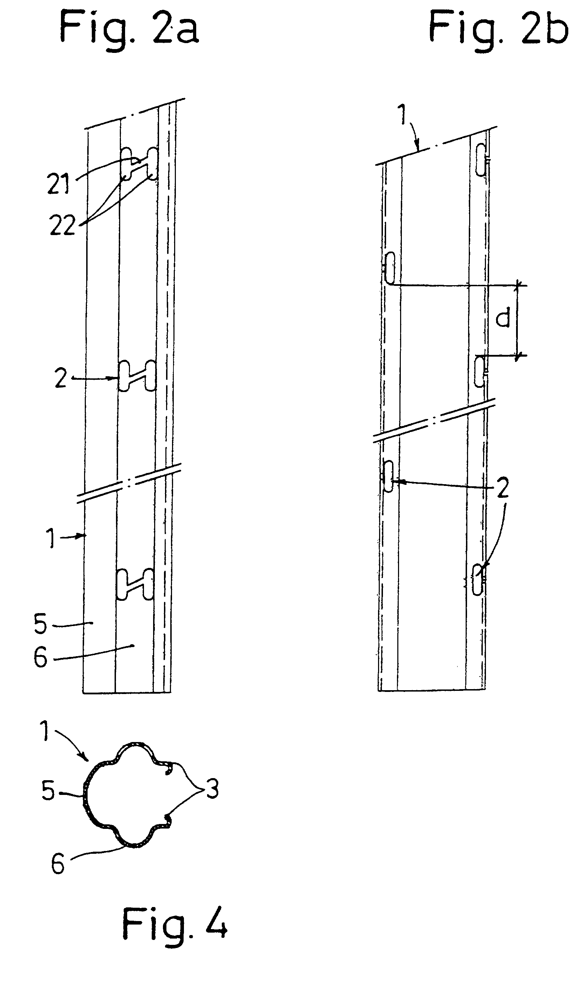

La figure 2 représente en deux phases, en hauteur -figure 2a- et de profil -figure 2b-, un poteau perfectionné pour treillages et similaires, selon l'invention, pour un exemple -non limitatif- de réalisation pratique alternative.

La figure 3 représente une section en plan qui correspond à la figure 1a.

La figure 4 représente une section en plan qui correspond à la figure 2a.

La présente invention a pour objet un poteau perfectionné, pour treillages et similaires, ayant pour structure un profilé ouvert (1), métallique, dont la longueur définit la hauteur du poteau.

Le profilé (1) est obtenu à partir d'une tôle laminée visant à définir un plan/section en "U", les bouts de ses ailes y définissant des boucles extrêmes (3) vers l'intérieur, ce qui confère une rigidité structurale à toute la surface, aussi bien extérieurement qu'intérieurement, en coopération avec des convexités en arc (5), (6) prévues, respectivement dans son âme et ses ailes.

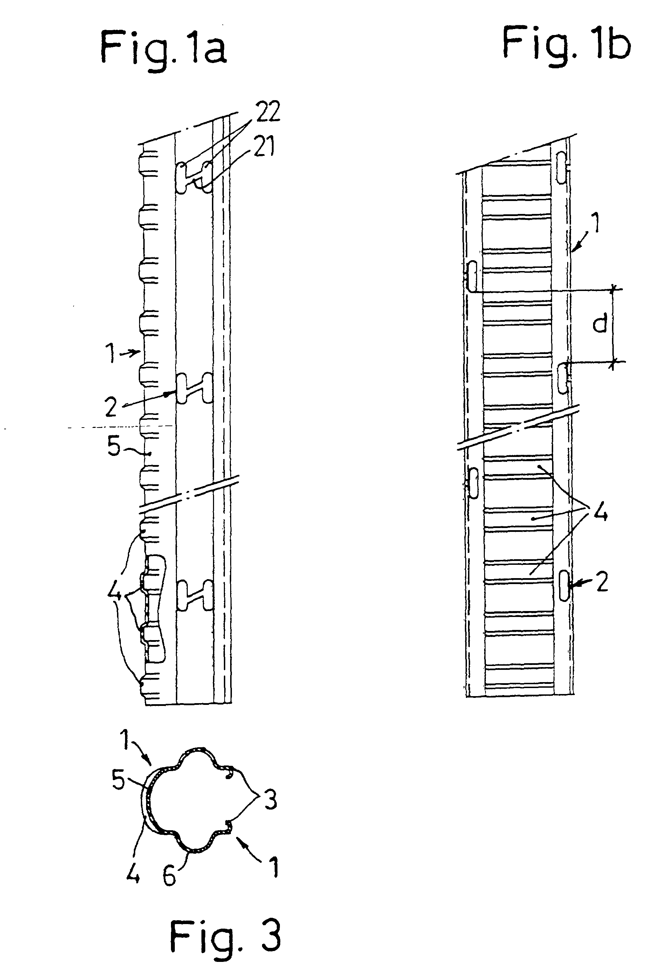

Le profilé en "U" ouvert (1) ainsi structuré peut comporter - figures 1 et 3- un grand nombre d'estampages transversaux (4) se distribuant sur un alignement axé sur son âme, afin de conférer une rigidité additionnelle.

Le profilé ouvert (1) comporte, dans tous les cas, un grand nombre d'orifices (2) distribués en deux alignements longitudinaux, sur ses ailes (notamment dans les convexités en arc (6) de ses ailes).

Dans la réalisation représentée, les orifices (2) ont une configuration en "H", les ailes (22) étant symétriques en longueur et parallèles à l'axe longitudinal du profilé (1) et l'âme (21) en rampe.

Notamment et sur un même profilé (1), les orifices (2) à alignement longitudinal d'une aile sont déphasés (d) par rapport aux orifices (2) de l'alignement longitudinal de l'aile opposée.

## Revendications

1. Poteau , pour treillages et similaires, ayant pour structure un profilé métallique dont la longueur définit la hauteur du poteau ayant
a) Ce profilé a une section ouverte en "U" dont l'âme et les ailes offrent une continuité structurale courbe et dépourvue de raccords assujettis sur toute sa surface périphérique, aussi bien extérieurement qu'intérieurement.
b) Ce profilé métallique ouvert comporte un grand nombre d'orifices se distribuant en deux alignements longitudinaux diamétralement opposés au niveau de ses ailes, et **se caractérisant par le fait que**
c) ce profilé métallique ouvert comporte un grand nombre d'estampages transversaux dont la distribution se fait dans un sens axé sur l'âme et qui lui confèrent une rigidité structurale.

## Claims

1. Upright, for trellises and similar, comprised of a metal profile, whose length defines the height of the upright, resolving that, :
a).- this profile has an open U-shaped section, whose core and flanges offer curved structural continuity that has no tied joints around the whole peripheral surface, either inside or outside;
b).- this open metal profile involves a plurality of openings, distributed in two longitudinal alignments diametrically opposed on the flanges, and it is characterised because
c) this open metal profile involves a plurality of transverse stamping distributed in a centred direction in the core, which provides it with structural rigidity.

## Patentansprüche

1. Pfosten für Weinlauben, Bogenlauben, Laubengänge und Ähnlichem, strukturiert aus einem Metallprofil, dessen Länge die Höhe des Pfostens bestimmt, **dadurch gekennzeichnet, daß**
a).- das genannte Profil einen offenen Querschnitt in 'U' hat, dessen Steg und Schenkel eine halbbogenförmige strukturelle Kontinuität ohne miteinander verbundene Verbindungen auf der gesamten Fläche des Umfangs sowohl außen als auch innen aufweist;
b).- das genannte offene Metallprofil eine Vielzahl von Öffnungen aufweist, welche in zwei längs verlaufenden Linien gegengleich in die Schenkel eingebracht sind, **dadurch gekennzeichnet, daß**
c) das offene Metallprofil eine Vielzahl von quer verlaufenden und zentriert am Steg eingebrachten Ausprägungen hat, welche dem Pfosten seine strukturelle Festigkeit verleihen.
